# FASCICULE DE BREVET EUROPEEN

(11) **EP 1 092 879 B1**
(45) Date de publication et mention de la délivrance du brevet: **07.07.2004**
(21) Numéro de dépôt: 00402794.2
(22) Date de dépôt: 10.10.2000
(51) Int. Cl.: F15B 15/14, B60G 11/26, F16F 9/38, F16F 9/36, F16F 9/58, F16F 9/43

(54) **Vérin de suspension hydropneumatique de véhicule**
Stellantrieb für eine hydropneumatische Fahrzeugradaufhängung
Actuator for a hydropneumatic suspension of a vehicle

(30) Priorité: 12.10.1999 FR 9912703
(43) Date de publication de la demande: 18.04.2001
(73) Titulaire: Peugeot Citroen Automobiles SA, 92200 Neuilly sur Seine (FR)
(72) Inventeur: Le Gourvellec, François, 78120 Rambouillet (FR)
(74) Mandataire: Berger, Helmut

(56) Documents cités:
- EP-A- 0 724 089
- FR-A- 2 661 731
- GB-A- 2 050 559
- US-A- 4 746 106
- US-A- 5 402 868
- PATENT ABSTRACTS OF JAPAN vol. 010, no. 021 (M-449), 28 janvier 1986 (1986-01-28) & JP 60 179315 A (NIHON HATSUJIYOU KK), 13 septembre 1985 (1985-09-13)
- PATENT ABSTRACTS OF JAPAN vol. 1996, no. 02, 29 février 1996 (1996-02-29) & JP 07 280022 A (TOYOTA MOTOR CORP), 27 octobre 1995 (1995-10-27)

## Description

L'invention concerne un vérin de suspension hydropneumatique de véhicule automobile, du type comprenant un cylindre relié à une roue par l'intermédiaire d'un bras de support de roue et dans lequel est monté coulissant un piston articulé à la structure du véhicule et dont la tige de piston est munie d'un alésage axial relié hydrauliquement à un accumulateur hydropneumatique, des moyens de récupération des fuites internes du vérin, des moyens assurant le coulissement sur la surface extérieure du cylindre d'un soufflet protecteur du vérin et des moyens d'appui d'une butée de fin de course du vérin.

Dans les vérins de suspension hydropneumatique de ce type, qui sont connus, les trois fonctions de récupération de fluide, de coulissement et d'appui sont accomplies par trois dispositifs différents, ce qui nécessite un nombre relativement important de composants et rend ainsi la structure du vérin complexe, complique le montage et augmente son coût global, voir par exemple le document US-A-4,746,106.

La présente invention a pour but de proposer un vérin de suspension hydropneumatique, du type décrit plus haut, qui pallie les inconvénients des vérins de suspension connus.

Pour atteindre ce but, le vérin de suspension selon l'invention est caractérisé en ce qu'une seule pièce est prévue pour accomplir les trois fonctions.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention.
La figure 1 est une vue en perspective d'un agencement de vérin de suspension hydropneumatique de véhicule automobile, selon la présente invention.
La figure 2 est une vue en perspective éclatée à plus grande échelle du vérin selon l'invention.
La figure 3 est une vue en perspective éclatée de la pièce indiquée en III sur la figure 1.
La figure 4 est une vue en coupe axiale de la pièce illustrée sur la figure 3.
La figure 5 est une vue de dessus, montrant le collier dans sa position avant le montage de la pièce sur le cylindre.
La figure 6 est une vue en coupe selon la ligne VI-VI de la figure 4 montrant le collier dans sa position après montage.

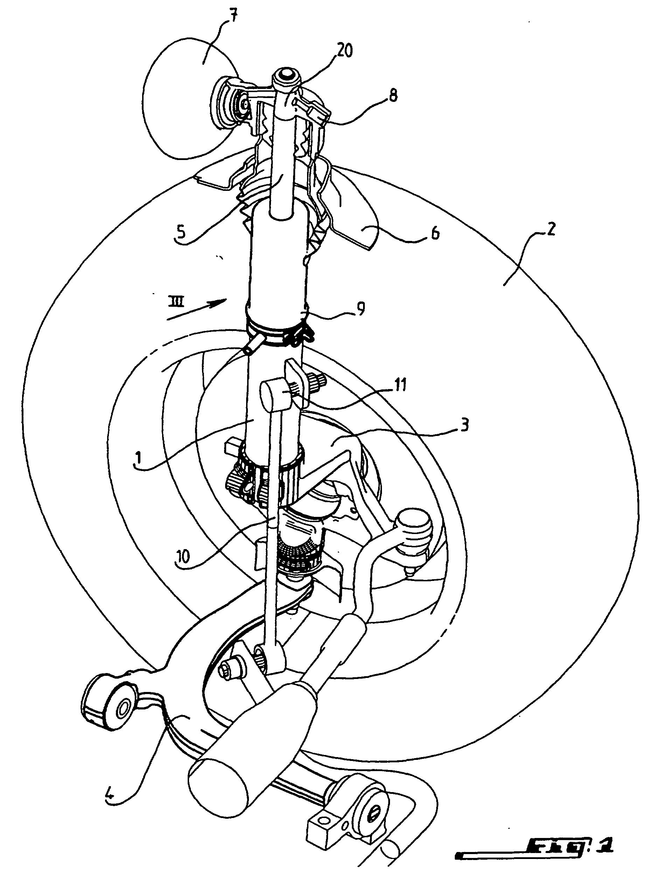

Comme on le voit sur la figure 1, un vérin de suspension hydropneumatique de véhicule automobile selon l'invention comprend essentiellement un cylindre 1, solidaire d'une roue 2 du véhicule, par l'intermédiaire d'un pivot 3, articulé à un bras support de roue 4 et dans lequel est monté coulissant un piston articulé à la structure 6 du véhicule. La tige de piston 5 est munie d'un alésage axial relié hydrauliquement à un accumulateur hydropneumatique 7 par l'intermédiaire d'un support d'accumulateur 8. Sur la figure 1 est montré encore un dispositif anti-roulis dont une biellette de barre anti-roulis 10 est fixée en 11 sur le cylindre 1.

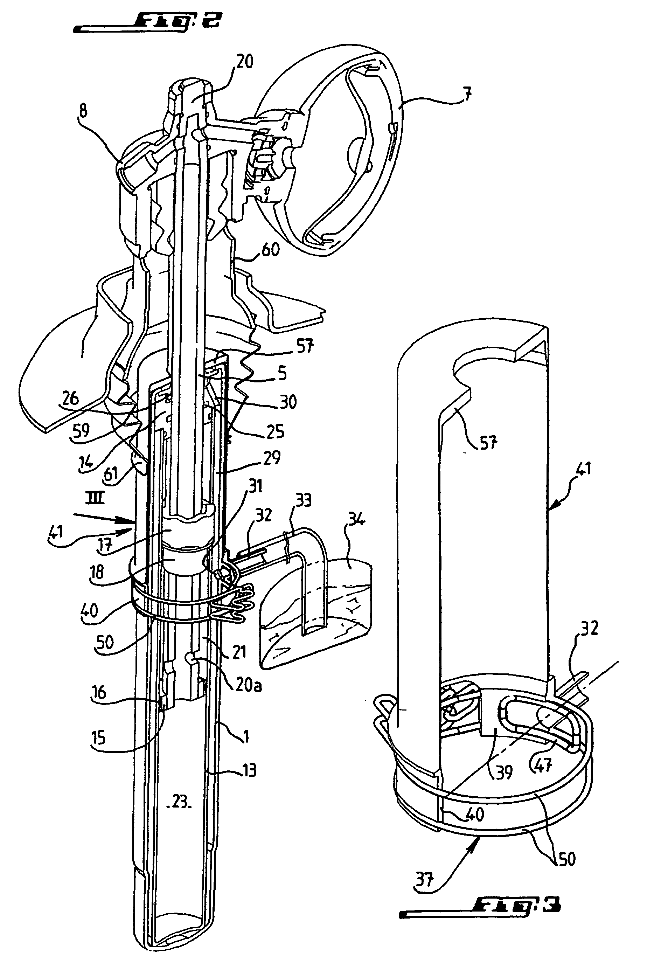

Le cylindre 1 est le corps extérieur d'une jambe de force du type bi-tube et enferme coaxialement un corps tubulaire intérieur 13 qui reçoit un palier supérieur 14 (fig. 2).

La tige de piston 5 est creuse et porte, à son extrémité inférieure ouverte, une tête de guidage 15 pourvue d'un segment 16. La tête coulisse sur la face interne du corps tubulaire 13. La tige porte encore, axialement au-dessus de la tête 15, une butée de détente 17 prenant appui sur une collerette 18 solidaire de la tige. L'extrémité supérieure de la tige de piston 5 est engagée dans la partie centrale 20 de l'ensemble formé par l'accumulateur 7 et son support 8. Le piston comporte encore, entre sa tête 15 et sa collerette annulaire d'appui 18, des orifices radiaux 20a qui établissent une communication entre l'espace interne de la tige creuse 5 et la chambre annulaire 21 délimitée entre la tige 5 et le corps tubulaire 13 de la jambe de force. Grâce aux orifices 20a, la chambre 23, délimitée dans le corps 13 en dessous de la tête de piston 15, est en communication, à travers l'extrémité inférieure ouverte de la tige 5, avec la chambre 21.

Le palier supérieur 14 traversé axialement par la tige de piston 5 à l'extrémité supérieure du cylindre 1 est muni d'un dispositif d'étanchéité dynamique 25 de la tige de piston 5. Un joint à lèvre 26 est prévu à l'extrémité supérieure du palier 14 entre le palier et la tige 5. Le joint est disposé dans une rainure annulaire pratiquée dans la face supérieure du palier. Le fond de cette rainure communique avec la chambre annulaire 29 délimitée entre le cylindre 1 et le corps tubulaire intérieur 13 par l'intermédiaire d'un conduit 30 interne au palier.

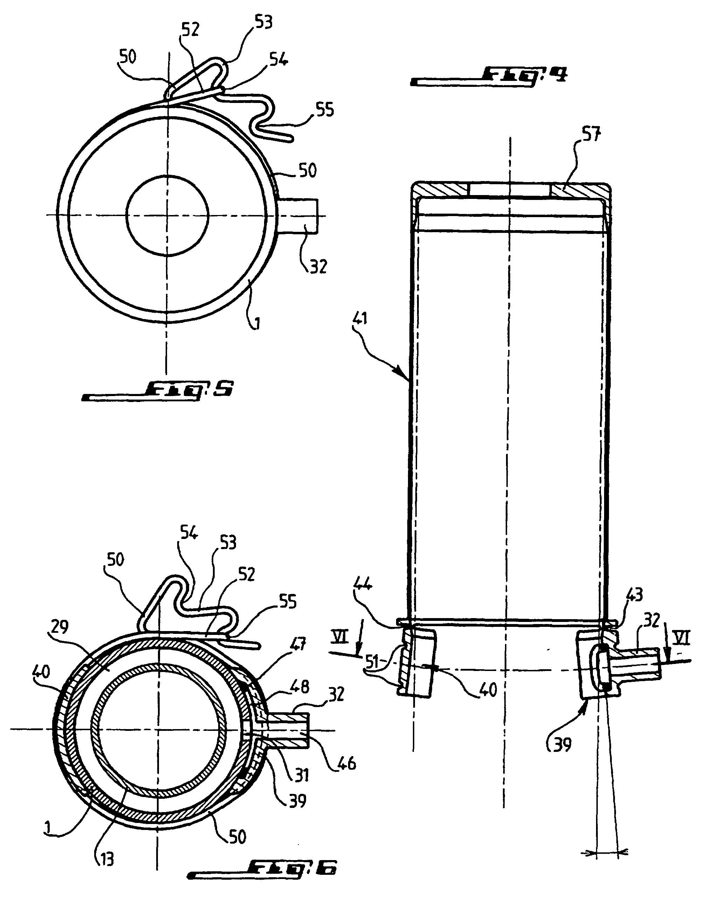

Etant donné que la jambe de force animée par les oscillations de la roue 2 coulisse sur la tige de piston creuse 5, du fluide s'écoule entre les chambres 23 et 21 du vérin. Le dispositif d'étanchéité 25 permet, d'autre part, un suintement de fluide sous pression lors du coulissement de la jambe de force et du palier 14 par rapport à la tige de piston 5. Ce fluide s'écoule à travers le conduit 30 dans la chambre 29. Le fluide s'accumule dans la chambre 29 et est évacué via un orifice 31 traversant la paroi du cylindre 1 vers un collecteur de retour de fuite 32. Du collecteur 32, le fluide est acheminé par l'intermédiaire d'une canalisation 33 à une bâche 34. Comme on le voit plus clairement sur les figures 3 à 6, le collecteur de retour de fuite 32 est susceptible d'être plaqué par l'intermédiaire d'un dispositif 37 sur la face périphérique du corps de cylindre extérieur 1.

Le dispositif de plaquage 37 comporte essentiellement deux languettes 39, 40 axiales, diamétralement opposées, à l'extrémité inférieure d'un corps tubulaire cylindrique 41 en matière plastique qui coiffe la partie supérieure du cylindre 1. Comme on le voit notamment sur les figures 4 et 6, chaque languette est articulée respectivement en 43 et 44 à l'extrémité inférieure du corps tubulaire 41. La languette 39 constitue le support du raccord du collecteur de fuite 32 sur lequel est emmanchée la tubulure 33 et elle est traversée par un canal 46. Comme on le voit sur la figure 6, la languette s'applique contre la face extérieure du cylindre de façon que le canal 46 soit en alignement avec l'orifice de passage de fuite 31 dans la paroi du cylindre 1. L'étanchéité est assurée par un joint 47 qui est placé dans un logement approprié 48 prévu sur la face intérieure de la languette 39.

La languette 40 est destinée à venir en application contre la face extérieure du cylindre 1, dans la zone diamétralement opposée à la languette 39. Un collier de serrage 50 assure le plaquage du dispositif de raccord de retour de fuite sur le cylindre 1. Le collier peut être un collier métallique à fermeture par encliquetage, comme montré sur les figures, ou à vis. Dans l'exemple représenté, le collier 50 est disposé autour des languettes 39, 40 en s'engageant dans des gorges périphériques 51 de retenue du collier, prévues sur les languettes. Le collier comporte à une extrémité un oeillet 52 et à son autre extrémité un élément d'encliquetage 53 à deux positions déterminées par deux creux de réception de l'oeillet 52, indiqués en 54 et 55, qui sont disposés à une certaine distance l'un de l'autre dans le sens de la périphérie du cylindre 1. Dans la position 54 représentée sur la figure 5, le collier se trouve dans une position de semi-encliquetage autour du cylindre 1. Dans cette position, les languettes ne sont pas appliquées contre le cylindre 1 et sont inclinées de la manière représentée sur la figure 4. Sur la figure 5, l'oeillet 52 est engagé dans le creux 54 de l'élément d'encliquetage 53. Par contre, lorsque l'oeillet est engagé dans le creux 55, les languettes sont plaquées contre le cylindre et le joint 47 est enserré entre le cylindre 1 et la languette 39 dans son logement 48 dans lequel il est maintenu de façon permanente soit par adhérisation, soit par compression due à une forme adaptée à la forme du logement.

Dans sa position de semi-encliquetage, le collier permet au collecteur de retour de fuite d'être suffisamment écarté de la périphérie du cylindre 1 pour éviter tout contact du joint avec le cylindre jusqu'à l'obtention de la position définitive lors de la mise en place de la pièce 41 par emmanchement sur l'extrémité supérieure du cylindre. L'encliquetage définitif du collier garantit le maintien, en translation et en rotation, de la pièce 41 sur le cylindre. La paroi 57 de fermeture de l'extrémité supérieure de la pièce 41, à l'exception du passage de la tige de piston, assure la fonction d'appui de butée de fin de course de la tige de piston. Cette paroi est renforcée de façon à protéger le joint à lèvre 26.

Il est encore à noter que le vérin est muni d'un soufflet de protection 59 (fig. 1) qui est fixé à son extrémité supérieure à une jupe 60 qui entoure la partie supérieure du vérin et dont l'extrémité inférieure 61 coulisse sur la face périphérique de la pièce 41, de manière étanche, le long de celle-ci.

Il ressort de la description qui vient d'être faite, en se référant aux figures, que la pièce 41 accomplit à elle seule les trois fonctions de récupération des fuites internes de la jambe de force, de coulissement du soufflet protecteur 59 du vérin et d'appui de la butée de fin de course du vérin.

## Revendications

1. Vérin de suspension hydropneumatique de véhicule automobile, du type comprenant un cylindre (1) relié à une roue (2) par l'intermédiaire d'un bras de support, et dans lequel est monté coulissant un piston articulé à la structure (6) du véhicule et dont la tige de piston (5) est munie d'un alésage axial relié hydrauliquement à un accumulateur hydropneumatique (7), des moyens (37) de récupération des fuites internes du vérin, des moyens assurant le coulissement sur la surface extérieure du cylindre d'un soufflet protecteur du vérin et des moyens d'appui d'une butée de fin de course du vérin, **caractérisé en ce qu'**une seule pièce (41) est prévue pour accomplir les trois fonctions précitées de récupération des fuites, de coulissement et d'appui (57).

2. Vérin de suspension selon la revendication 1, **caractérisé en ce que** la pièce (41) précitée présente une forme cylindrique et est emmanchée sur l'extrémité supérieure du cylindre (1) du vérin.

3. Vérin de suspension selon la revendication 2, **caractérisé en ce que** les moyens qui accomplissent la fonction de récupération des fuites sont prévus sur l'extrémité inférieure ouverte de la pièce (41), sont susceptibles d'être serrés sur la périphérie du cylindre (1) et portent un raccord de retour de fuites (32).

4. Vérin de suspension selon la revendication 3, **caractérisé en ce que** les moyens accomplissant la fonction de récupération des fuites comprennent deux éléments (39, 40) articulés au corps de la pièce (41), dont l'un (39) porte le raccord de retour de fuites.

5. Vérin de suspension selon la revendication 4, **caractérisé en ce que** chaque élément (29, 30) est réalisé sous forme d'une languette s'étendant axialement à une extrémité de la pièce (41), en étant articulée à celle-ci, et **en ce qu'**un collier de serrage (50) est prévu pour plaquer les languettes sur le cylindre (1), ce dernier comportant un orifice de retour de fuites (31) communiquant avec le raccord de retour de fuites (32).

6. Vérin de suspension selon la revendication 5, **caractérisé en ce que** l' élément (39) porteur du raccord de retour de fuites (32) est une languette et est pourvu d'un joint (47) disposé sur la face interne de la languette de sorte que le joint (47) soit appliqué de façon étanche entre la surface périphérique du cylindre et la face interne de la languette (39) autour de l'orifice de sortie de fuites (31) lorsque cette languette est plaquée contre la surface du cylindre.

7. Vérin de suspension selon l'une des revendications 1 à 6, **caractérisé en ce que** les moyens qui accomplissent la fonction d'appui de butée sont constitués par la partie supérieure (57) de la pièce cylindrique (41).

8. Vérin de suspension selon la revendication 7, **caractérisé en ce que** la paroi (57) est renforcée.

9. Vérin de suspension selon l'une des revendications précédentes, **caractérisé en ce que** les moyens accomplissant la fonction de maintien du soufflet de protection sont formés par la paroi latérale de la pièce cylindrique (41).

## Patentansprüche

1. Stellantrieb für eine hydropneumatische Radaufhängung eines Kraftfahrzeugs, vom Typ mit einem Zylinder (1), der über einen Tragarm mit einem Rad (2) verbunden ist, und bei dem ein am Fahrzeugaufbau (6) angelenkter Kolben gleitbeweglich gelagert ist, dessen Kolbenstange (5) mit einer axialen Bohrung versehen ist, die hydraulisch mit einem hydropneumatischen Speicher (7) in Verbindung steht, und mit Mitteln (37) zum Auffangen von inneren Leckagen des Stellantriebs, Mitteln, welche die Gleitbewegung eines Schutzbalgs des Stellantriebs an der Außenfläche des Zylinders gewährleisten, sowie mit Mitteln zum Abstützen eines Endanschlags des Stellantriebs, **dadurch gekennzeichnet, dass** ein einziges Teil (41) vorgesehen ist, um die drei vorgenannten Funktionen zum Auffangen von Leckagen, zum Gleiten und zum Abstützen (57) zu erfüllen.

2. Stellantrieb für eine Radaufhängung nach Anspruch 1, **dadurch gekennzeichnet, dass** das vorgenannte Teil (41) eine zylindrische Form aufweist und am oberen Ende des Zylinders (1) des Stellantriebs aufgepresst ist.

3. Stellantrieb für-eine Radaufhängung nach-Anspruch 2, **dadurch gekennzeichnet, dass** die Mittel, welche die Funktion des Auffangens von Leckagen erfüllen, am offenstehenden unteren Ende des Teils (41) vorgesehen sind, am Umfang des Zylinders (1) andrückbar sind und einen Leckagenrücklaufanschluss (32) tragen.

4. Stellantrieb für eine Radaufhängung nach Anspruch 3, **dadurch gekennzeichnet, dass** die Mittel, welche die Funktion des Auffangens von Leckagen erfüllen, zwei Elemente (39, 40) enthalten, die am Körper des Teils (41) angelenkt sind und von denen das eine (39) den Leckagenrücklaufanschluss trägt.

5. Stellantrieb für eine Radaufhängung nach Anspruch 4, **dadurch gekennzeichnet, dass** jedes Element (29, 30) in Form einer Zunge ausgebildet ist, die sich axial an einem Ende des Teils (41) erstreckt, indem sie an diesem angelenkt ist, und dass eine Klemmbefestigung (50) vorgesehen ist, um die Zungen an den Zylinder (1) anzudrücken, wobei letzterer eine Leckagenrücklauföffnung (31) enthält, die mit dem Leckagenrücklaufanschluss (32) in Verbindung steht.

6. Stellantrieb für eine Radaufhängung nach Anspruch 5, **dadurch gekennzeichnet, dass** das den Leckagenrücklaufanschluss (32) tragende Element (39) eine Zunge ist und mit einer Dichtung (47) versehen ist, die an der Innenseite der Zunge so angeordnet ist, dass die Dichtung (47) in dichter Weise zwischen der Umfangsfläche des Zylinders und der Innenseite der Zunge (39) um die Leckagenaustrittsöffnung (31) herum anliegt, wenn diese Zunge an die Zylinderfläche angedrückt ist.

7. Stellantrieb für eine Radaufhängung nach einem der Ansprüche 1 bis 6, **dadurch gekennzeichnet, dass** die Mittel, welche die Funktion des Abstützens des Anschlags erfüllen, aus dem oberen Abschnitt (57) des zylindrischen Teils (41) bestehen.

8. Stellantrieb für eine Radaufhängung nach Anspruch 7, **dadurch gekennzeichnet, dass** die Wand (57) verstärkt ausgeführt ist.

9. Stellantrieb für eine Radaufhängung nach einem der vorangehenden Ansprüche, **dadurch gekennzeichnet, dass** die Mittel, welche die Funktion zum Halten des Schutzbalgs erfüllen, aus der Seitenwand des zylindrischen Teils (41) gebildet sind.

## Claims

1. Actuator of hydropneumatic suspension for motor vehicles consisting of a cylinder (1) connected to a wheel (2) by means of a supporting arm and in which there is a slidingly fitted piston which is attached to the structure (6) of the vehicle and whose piston rod (5) has an axial bore which is hydraulically connected to a hydropneumatic accumulator (7), means (3 7) for the recovery of internal leaks from the actuator, means for ensuring that the protective bellows of the actuator are able to slide over the external surface of the cylinder and means for supporting the actuator stop, **characterised by** the fact that a single part (41) is provided to perform the three above functions of recovery of leaks, sliding and support (57).

2. Suspension actuator according to claim 1, **characterised by** the fact that the aforementioned part (41) is cylindrical and attached to the top end of the actuator cylinder (1).

3. Suspension actuator according to claim 2, **characterised by** the fact that the means of recovering the leaks are provided at the lower open end of the part (41), are able to be screwed on to the periphery of the cylinder (1) and have a leak return connection (32).

4. Suspension actuator according to claim 3, **characterised by** the fact that the means of recovering the leaks consist of two elements (39, 40) connected to the body of the part (41), one of which (39) has a leak return connection..

5. Suspension actuator according to claim 4, **characterised by** the fact that each element (29, 30) is in the form of a tongue which extends axially to one end of the part (41), being connected to the latter, and by the fact that a clamp fitting (50) is provided for the purposes of placing the tongues flat against the cylinder (1), the latter having a leak return hole (3 1) which is in contact with the leak return connection (32).

6. Suspension actuator according to claim 5, **characterised by** the fact that the element (39) which has the leak return connection (32) is a tongue and has a joint (47) which is positioned on the internal face of the tongue in such a way that the joint (47) is attached so that it forms an impervious layer between the peripheral surface of the cylinder and the internal face of the tongue (39) around the leak outlet hole (31) when this tongue is placed flat against the surface of the cylinder.

7. Suspension actuator according to one of the claims 1 to 6, **characterised by** the fact that the means of supporting the stop consist of the top part (57) of the cylindrical part (41).

8. Suspension actuator according to claim 7, **characterised by** the fact that the wall (57) is strengthened.

9. Suspension actuator according to one of the previous claims, **characterised by** the fact that the means of supporting the protective bellows are formed by the lateral wall of the cylindrical part (41).
